# EUROPEAN PATENT APPLICATION

(11) **EP 4 663 486 A1**
(43) Date of publication of application: **17.12.2025**
(21) Application number: 23921382.0
(22) Date of filing: 25.12.2023
(51) Int. Cl.: B60R 21/232, B60R 21/213, B60R 21/237

(54) **CURTAIN AIRBAG, VEHICLE BODY, METHOD FOR MANUFACTURING CURTAIN AIRBAG, METHOD, PASSENGER RESTRAINT DEVICE**

(30) Priority: 06.02.2023 JP 2023016231
(71) Applicant: Autoliv Development AB, 44783 Vargarda (SE)
(72) Inventor: KOBAYASHI, Yuto, Yokohama-shi, Kanagawa 222-8580 (JP); HIRATA, Yutaka, Yokohama-shi, Kanagawa 222-8580 (JP); OKA, Shinya, Yokohama-shi, Kanagawa 222-8580 (JP)
(74) Representative: Müller Verweyen
(86) International application number: PCT/JP2023/046301
(87) International publication number: WO 2024/166564

(57) **Abstract**

The curtain airbag includes a main chamber that extends from a front side toward a rear side of a side part of a vehicle body, and a rear chamber provided behind the main chamber. The curtain airbag is rolled upward from below, folded, and attached to the vehicle body in a state where a rear end of the rear chamber is folded back so as to contact a first surface of the main chamber. When the reclining angle of a seatback of a rear row seat attached to the vehicle body is at a first angle and the curtain airbag expands and deploys, the airbag enters a first expansion and deployment state. When the reclining angle of the seatback of the rear row seat is at a second angle smaller than the first angle and the curtain airbag expands and deploys, the airbag enters a second expanded and deployed state.

## Description

### TECHNICAL FIELD

The present technology relates to a curtain airbag, a vehicle body, a method for manufacturing a curtain airbag, and an occupant restraint device.

### BACKGROUND ART

In recent years, many vehicles are equipped with an airbag device in order to protect an occupant in the event of a collision. Some models are equipped with a curtain airbag device. A curtain airbag device is provided with a curtain airbag folded and stored on an upper side of a door of a vehicle and an inflator that operates in the event of a vehicle collision to inject gas into the curtain airbag. The curtain airbag expands and deploys inside the vehicle cabin by the action of gas discharged from an inflator, and the occupant is supported by the expanded curtain airbag and protected from side collisions with various parts of the vehicle cabin (see, for example, Patent Document 1).

### RELATED ART DOCUMENTS

### PATENT DOCUMENTS

Patent Document 1: JP 2016-22918 A

### SUMMARY OF THE INVENTION

### PROBLEM TO BE SOLVED BY THE INVENTION

The seatback of the rear row seat provided in a vehicle may be reclined. The position of the head of a seated occupant relative to the vehicle body differs depending on whether the seatback is tilted backward or not. The curtain airbag described in Patent Document 1 does not take into consideration protection of the heads of occupants when the seatback of the rear row seat is tilted backward at a large angle.

In light of the circumstances described above, an object of the present disclosure is to provide a curtain airbag and the like that is able to protect the occupant in both cases where the reclining angle of the rear row seat is large or small.

### MEANS FOR SOLVING THE PROBLEM

A curtain airbag according to an embodiment of the present disclosure includes:
a main chamber (13) extending from a front side toward a rear side of a vehicle body (50); and
a rear chamber (14) provided to the rear of the main chamber (13), wherein the airbag:
   is rolled upward from below, folded, and attached to the vehicle body (50) in a state where a rear end of the rear chamber (14) is folded back so as to contact a first surface of the main chamber (13),
   enters a first expansion and deployment state upon expansion and deployment when the reclining angle of the seatback (S1) of the rear row seat (S) attached to the vehicle body (50) is at a first angle, where the rear chamber (14) deploys behind the main chamber (13), and
   enters a second expanded and deployed state upon expansion and deployment when the reclining angle of the seatback (S1) of the rear row seat (S) is set to a second angle smaller than the first angle, where the main chamber (13) and the rear chamber (14) expand and deploy while remaining in a folded-back state sandwiched between the vehicle body (50) and the interior wall (5a).

In the present disclosure, when the rear row seats are used in a state in which the seatbacks are set with a large reclining angle (tilted back state), the rear chamber of the curtain airbag (airbag) expands and deploys rearward. Thereby occupants seated in the rear row seats in the tilted back state can be prevented from rocking due to an impact from outside the vehicle body. In addition, when the seatback is used with a small reclining angle of the seatback (non-tilted back state), the rear row seats prevent the rear chamber, which is folded forward, from deploying rearward due to expansion. As a result, a part of the main chamber and the rear chamber expand between the rear row seats and the vehicle body side interior wall, filling the space between the rear row seats and the vehicle body side interior wall. As a result, when the rear row seats are in a non-tilted back state, occupants seated in the rear row seats can be prevented from rocking due to an impact from outside the vehicle body. Note that in this embodiment, the interior wall includes the vehicle body inner wall, the inner surface of the window glass on the rear side of the side surface, and the inner surface of the rear side door (door trim), but may include only some of the above-mentioned elements.

The curtain airbag according to an embodiment of the present disclosure includes:
a partition part (61) that partitions the main chamber (13) and the rear chamber (14).

In the present disclosure, the rear chamber is partitioned from the main chamber by a partition part, which allows the rear chamber and the main chamber to expand to internal pressures sufficient to protect the occupants without requiring a large amount of gas.

The curtain airbag according to an embodiment of the present disclosure, wherein the partition part (61) is provided with a vent hole (61a) through which gas can pass between an interior of the main chamber (13) and an interior of the rear chamber (14).

In the present disclosure, gas flows into the rear chamber through the vent holes, allowing the rear chamber to expand and deploy.

The curtain airbag according to an embodiment of the present disclosure, wherein the rear chamber (14) expands and deploys in a position corresponding to a head of an occupant (P) seated in a comfortable orientation on the rear row seat (S) reclined at the first angle, and is set to the first expansion and deployment state.

In the present disclosure, the rear chamber of the curtain airbag expands and deploys at a position corresponding to the head of an occupant sitting in a comfortable orientation of the rear row seat in the tilted back state. The comfortable orientation is a position in which the back is placed against the seatback of the rear row seat in the tilted back state and the head is placed against the headrest. The position corresponding to the head of an occupant seated in a comfortable orientation is, for example, the same position in the vertical and front-to-back direction relative to the vehicle body as the head of an occupant seated in a comfortable orientation. As a result, when an occupant is seated in the comfortable orientation in the rear row seat, it is possible to protect the head of the occupant which may swing from side to side due to an impact from outside the vehicle body.

The curtain airbag according to an embodiment of the present disclosure, wherein the rear chamber (14) of the curtain airbag (1) is provided with a temporary sewn part (20) that, in a folded state, connects the rear chamber (14) to the main chamber (13), and breaks when the rear chamber (14) deploys into the first expansion and deployment state.

In the present disclosure, the temporary sewn part connects the folded rear chamber and the main chamber in a state where the curtain airbag is folded. When the curtain airbag expands and deploys, the temporary sewn part delays the expansion and deployment of the rear chamber relative to the main chamber, and after the main chamber expands, the temporary sewn part breaks and the rear chamber expands and deploys. Thereby rocking of the rear chamber upon expansion and deployment is suppressed, enabling stable expansion and deployment of the curtain airbag.

A vehicle body according to an embodiment of the present disclosure is provided with the curtain airbag according to claim 1.

In the present disclosure, the curtain airbag can protect the occupants regardless of whether the rear row seats are tilted backward at a large reclining angle or a small angle.

A method for manufacturing a curtain airbag according to an embodiment of the present disclosure that is attached to a vehicle body (50) and expands and deploys by means of gas supplied from an inflator (2), the method including:
preparing a curtain airbag (1) including a main chamber (13) that extends from a front side toward a rear side of a side part of the vehicle body (50), and a rear chamber (14) provided to the rear of the main chamber (13);
folding a rear end of the rear chamber (14) forward so as to contact a first surface of the main chamber (13); and
rolling and folding the main chamber (13) and the rear chamber (14) upward from below.

In the present disclosure, since the curtain airbag is rolled upward after the rear chamber is folded back forward, a length of the curtain airbag in the front-to-back direction in the folded state is shorter than a length of the curtain airbag in the front-to-back direction in the deployed state. Accordingly, the curtain airbag including the rear chamber can be folded compactly.

The method of manufacturing the curtain airbag according to an embodiment of the present disclosure, further including connecting of the folded-back rear chamber (14) to the main chamber (13) by means of a temporary sewn part (20).

According to the present disclosure, positional deviation can be prevented when the main chamber and the rear chamber are rolled up and folded.

A method according to an embodiment of the present disclosure of attaching a curtain airbag (1) to a vehicle body (50), the method including:
preparing a curtain airbag (1) including a main chamber (13) extending from a front side toward a rear side of a side part of the vehicle body (50), and a rear chamber (14) provided to the rear of the main chamber (13);
folding a rear end of the rear chamber (14) forward so as to contact a first surface of the main chamber (13); and
rolling and folding the main chamber (13) and the rear chamber (14) upward from below, and
attaching the curtain airbag (1) to the vehicle body (50) such that:
   upon expansion and deployment when a seatback (S1) of a rear row seat (S) attached to the vehicle body (50) is reclined at a first angle, the rear chamber (14) deploys behind the main chamber (13) and the airbag enters a first expansion and deployment state; and
   upon expansion and deployment when an angle of the seatback (S1) is at a second angle lower than the first angle, the main chamber (13) and the rear chamber (14) expand and deploy while remaining in a folded-back state sandwiched between an interior wall (5a) of the vehicle body (50) and the rear row seat (S), and the airbag enters a second expanded and deployed state.

In the present disclosure, the curtain airbag can protect the occupants regardless of whether the rear row seats are tilted backward at a large reclining angle or a small angle.

An occupant restraint device (10) according to an embodiment of the present disclosure including:
a curtain airbag (1) including a main chamber (13) extending from a front side toward a rear side of a side part of a vehicle body (50), and a rear chamber (14) provided behind the main chamber (13); and
a rear row seat (S) attached to the vehicle body (50), and including a seatback (S1) that reclines rearward, wherein the curtain airbag (1):
   is rolled upward from below, folded, and attached to the vehicle body (50) in a state where a rear end of the rear chamber (14) is folded back so as to contact a first surface of the main chamber (13),
   enters a first expansion and deployment state upon expansion and deployment when the reclining angle of the seatback (S1) of the rear row seat (S) is set to a first angle, where the rear chamber (14) deploys behind the main chamber (13), and
   enters a second expanded and deployed state upon expansion and deployment when the reclining angle of the seatback (S1) of the rear row seat (S) is set to a second angle smaller than the first angle, where the main chamber (13) and the rear chamber (14) expand and deploy while remaining in a folded-back state sandwiched between the vehicle body (50) and a side inner wall (5a).

In the present disclosure, the curtain airbag can protect the occupants regardless of whether the rear row seats are tilted backward at a large reclining angle or a small angle.

### Effect of Invention

With the curtain airbag according to an embodiment of the present disclosure, the occupant can be protected by the curtain airbag in both cases where the reclining angle of the rear row seat is large or small.

### BRIEF DESCRIPTION OF THE DRAWINGS

FIG. 1 is a schematic side view depicting a curtain airbag in an attached condition;
FIG. 2 is a schematic left side view depicting a deployed airbag;
FIG. 3 is a side view of an airbag describing a method of folding an airbag;
FIG. 4 is a side view of the airbag describing a method of folding the airbag;
FIG. 5 is a side view of the airbag describing a method of folding the airbag;
FIG. 6 is a schematic front view of the airbag describing a method of folding the airbag;
FIG. 7 is a side view depicting the occupant restraint device in a first expansion and deployment state;
FIG. 8 is a schematic cross-sectional view taken along line A-A and line B-B in FIG. 7;
FIG. 9 is a side view depicting the occupant restraint device in a second expanded and deployed state; and
FIG. 10 is a cross section schematic view taken along the line X-X in FIG. 9.

### EMBODIMENTS OF THE INVENTION

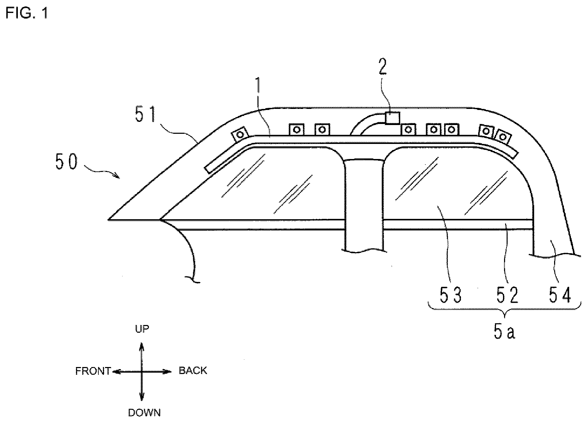

The present invention will be described below based on drawings depicting a curtain airbag 1 according to an embodiment. FIG. 1 is a schematic side view depicting a curtain airbag in an attached state. The curtain airbag (hereinafter, airbag) 1 is provided in a roof side rail part 51 of a vehicle body 50 and is covered by a headlining (not depicted). An inflator 2 is provided on the roof side rail part 51. A door trim 52 is provided below the roof side rail part 51, and a window glass 53 is disposed between the roof side rail part 51 and the door trim 52. A vehicle body inner wall 54 is positioned behind window glass 53. An inflator 2 supplies gas into the airbag 1. In the present embodiment, the airbag 1 provided in a roof side rail part 51 on the right side of a vehicle body 50 will be described as an example. Door trim 52, the window glass 53, and the vehicle body inner wall 54 constitute a vehicle body side interior wall 5a.

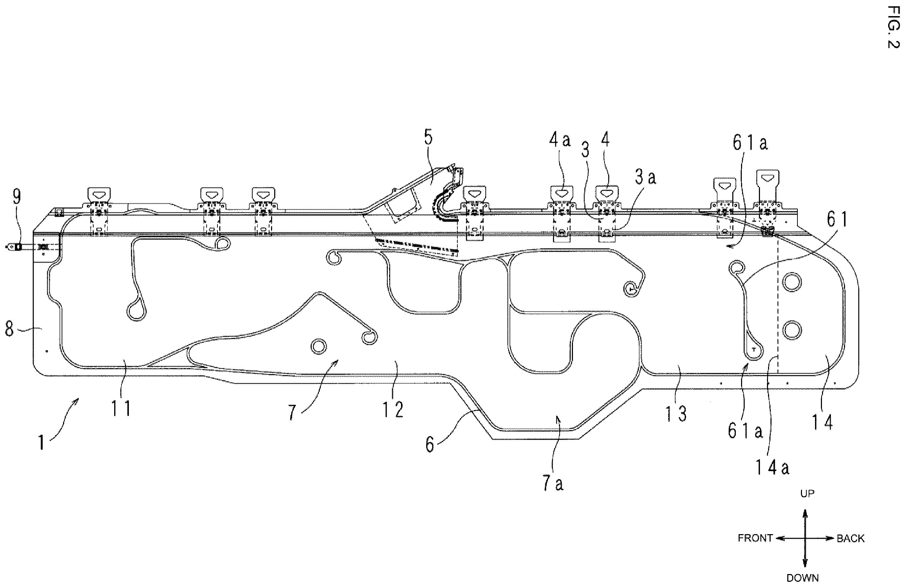

FIG. 2 is a schematic left side view depicting a deployed airbag 1. The airbag 1 is a bag-like object where sheet materials that are symmetrically shaped are overlappingly integrated. Note that in the present embodiment, an example is described where the airbag 1 is configured from two pieces of material such as a woven material or the like stitched into a bag shape, it but may be manufactured from a single piece of a woven material stitched into a bag shape from the beginning.

A plurality of the fasteners 4 are formed protruding from an upper side in a longitudinal direction (front-to-back direction) of the airbag 1 having a rectangular shape at a prescribed distance. Furthermore, a plurality of the fasteners 4 corresponding to the tabs 3 are provided on the airbag 1 on a lower side of the fasteners 4. A wrap 3a is further connected to the lower part of the tab 3. As described above, the wrap 3a is rotatable around an axis parallel to the front-to-back direction. The tab 3, the wrap 3a, and the fastener 4 are integrally provided on the base fabric of the airbag 1 by sewing. The tab 3, wrap 3a, and fastener 4 are disposed on a right surface of the airbag 1, for example.

The fastener 4 is provided with an opening 4a. The wrap 3a circumferentially extends around the airbag 1 at least once, in order to retain the airbag 1 in a rolled state or folded state, and is inserted into an opening 4a of the fastener 4 and latched therewith. The airbag 1 is attached to the roof side rail part 51 of the vehicle body 50 by the fastener 4. Furthermore, a connecting part 5 for connecting to the inflator 2 is provided at a center in the front-to-back direction on an upper edge part of the airbag 1. The connecting part 5 protrudes upwardly from the upper edge part of the airbag 1.

The airbag 1 includes a front chamber 11, a lower chamber 12, a main chamber 13, and a rear chamber 14. The front chamber 11 is positioned at the front of the airbag 1. The lower chamber 12 is positioned behind the front chamber 11 and partially protrudes downward. The main chamber 13 is positioned behind the lower chamber 12, and the rear chamber 14 is positioned further behind the main chamber 13. The main chamber 13 and the rear chamber 14 are partitioned by a partition part 61. The partition part 61 is formed by sewing two left and right sheet materials together along the vertical direction. Note that the partition part 61 may be formed by welding two left and right sheet materials. The upper and lower portions of the partition part 61 are not sewn together, thereby providing a vent hole 61a. That is, the gas supplied from the inflator 2 passes through the inside of the main chamber 13 and the vent hole 61a and flows into the rear chamber 14.

A fold line 14a is formed behind the partition part 61, that is, in the rear chamber 14. The fold line 14a is substantially parallel to the partition part 61.

A seam 6 is provided in the airbag 1, and by the seam 6, an expanding part 7, including a front chamber 11, a lower chamber 12, a main chamber 13, and a rear chamber 14, is partitioned from a non-expanding part 8. The non-expanding part 8 includes a portion formed around the periphery of the airbag 1 and a portion independently present in a central region. The expanding part 7 is primarily formed in the center part of the airbag 1 and includes a downwardly expanding part 7a formed in the lower chamber 12. During deployment, the downwardly expanding part 7a extends below an upper edge part of the door trim 52.

A strap 9 is provided at a upper front part of the airbag 1. The strap 9 is long and narrow and extends in the front-to-back direction. A rear end part of the strap 9 is attached to the non-expanding part 8 at the front edge part of the airbag 1. A front end portion of the strap 9 is secured to the vehicle body 50, and therefore, the airbag 1 is pulled in the front-to-back direction, thereby applying tension to the airbag 1.

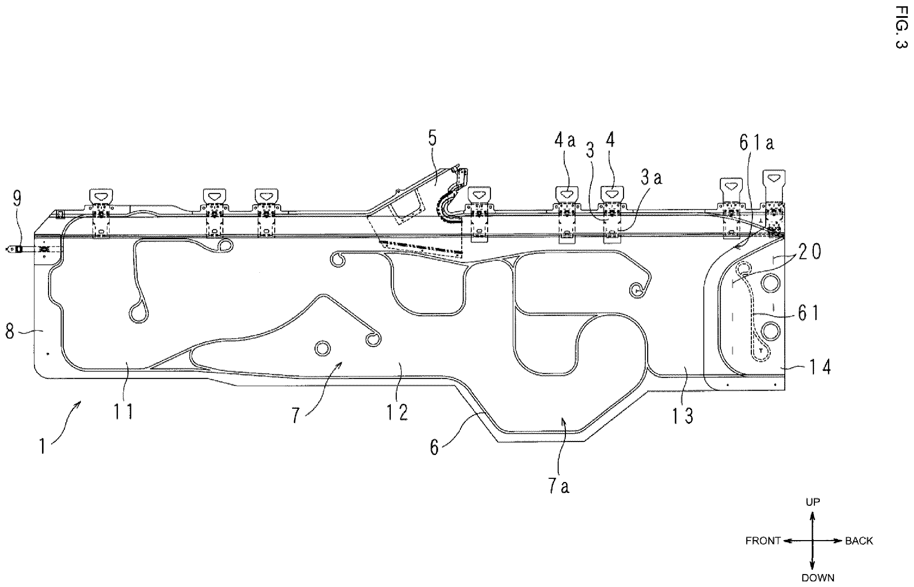

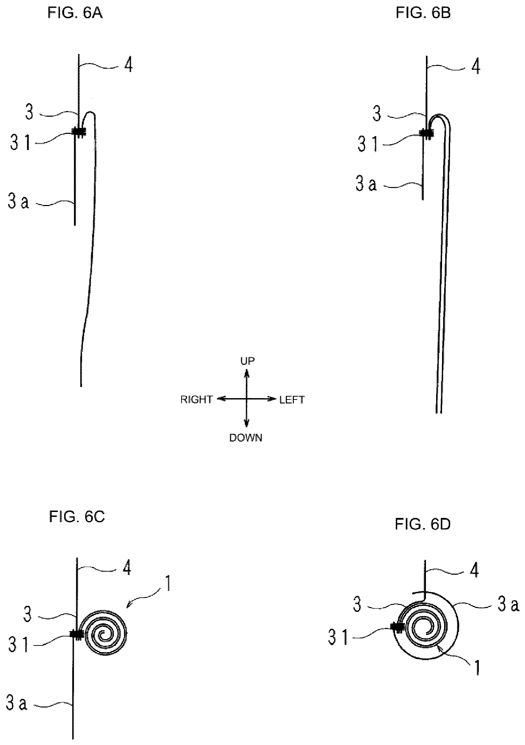

Next, a folding method of the airbag 1 will be described. FIG. 3 to FIG. 5 are side views of the airbag 1 for describing the folding method of the airbag 1, and FIG. 6 is a schematic front view of the airbag 1 for describing the folding method of the airbag 1. Note that the front surface and rear surface herein correspond to the front-to-back direction of the vehicle, and side surface corresponds to the left-right direction of the vehicle. As depicted in FIG. 2 and FIG. 6A, in an initial condition, the airbag 1 is deployed. Note that in the initial state, each chamber is uninflated, and the fabric on the left side and the right side are in contact with each other on the inside. The tab 3, wrap 3a, and airbag 1 are sewn together at a sewn part 31 and are integrally formed.

As depicted in FIG. 3, the rear chamber 14 is folded back forward along the fold line 14a so that the rear chamber 14 faces the left side surface of the main chamber 13. Herein, "right" indicates a right direction when viewing forward from a rear portion of the vehicle. "Left" indicates a left direction when viewing forward from a rear portion of the vehicle.

In the state depicted in FIG. 3 and FIG. 6B, the rear chamber 14 is temporarily secured to the main chamber 13. The temporary sewn part 20 connects the rear chamber 14 to the main chamber 13. In the present embodiment, the temporary sewn parts 20 are formed so as to be arranged vertically at three locations each on the front part and the rear part of the rear chamber 14 in the folded-back state. The temporary sewn part 20 prevents displacement of the main chamber 13 and the rear chamber 14 relative to the winding device when the airbag 1 is rolled using the rolling device. The temporary sewn part 20 is broken during the first expansion and deployment of the airbag 1, and the rear chamber 14 is deployed rearward.

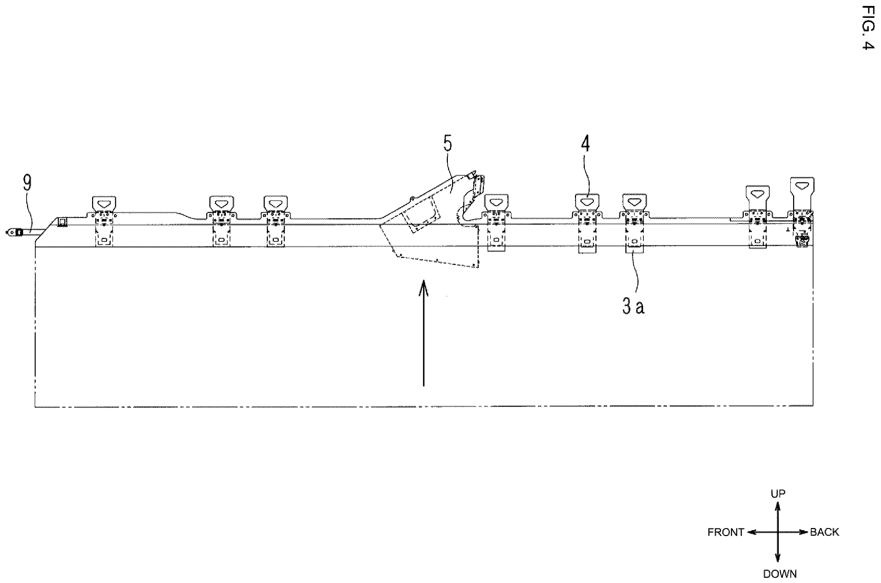

As depicted in FIG. 4 and FIG. 6C, the airbag 1 is rolled from the lower end to the right side surface. In FIG. 4, the dash-dotted line indicates an outline of the airbag 1 at the beginning of rolling. As depicted by the solid line in Fig. 4 and in Fig. 6C, the airbag 1 is rolled and folded to a position near the fastener 4. Note that the airbag 1 may be folded in a bellows shape from the lower side to the upper side.

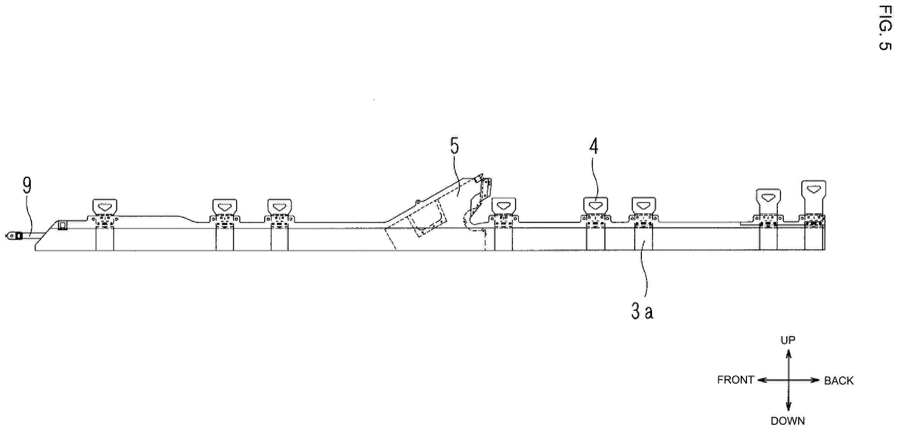

As depicted in FIG. 5 and FIG. 6D, the wrap 3a is wrapped around the outer peripheral surface of the airbag 1 in a roll shape and attached to the opening 4a of the fastener 4. The airbag 1 is retained in the folded state by the tab 3. When attaching the airbag 1 to the vehicle body 50, the fastener 4 is used to secure the rod shaped airbag 1 to the roof side rail part 51.

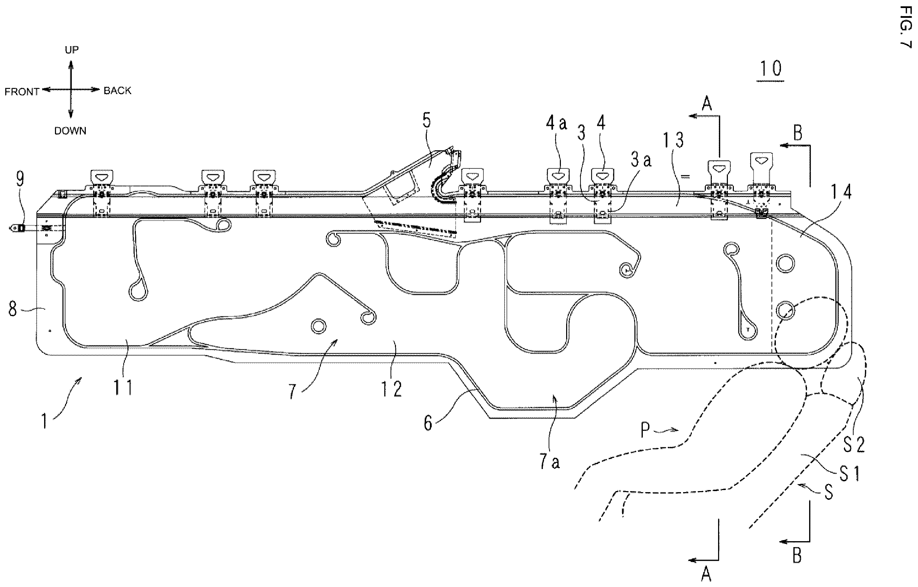

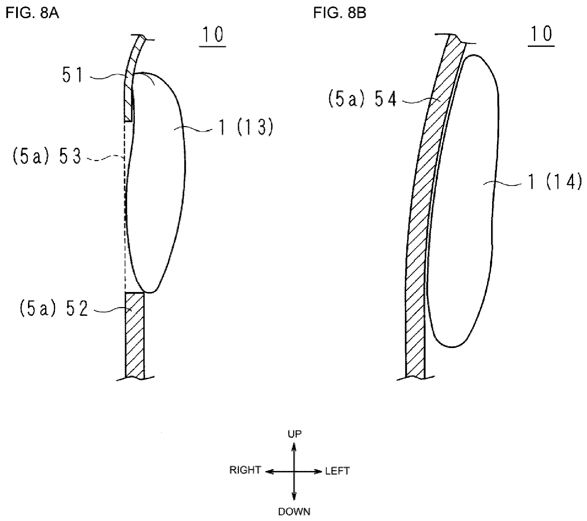

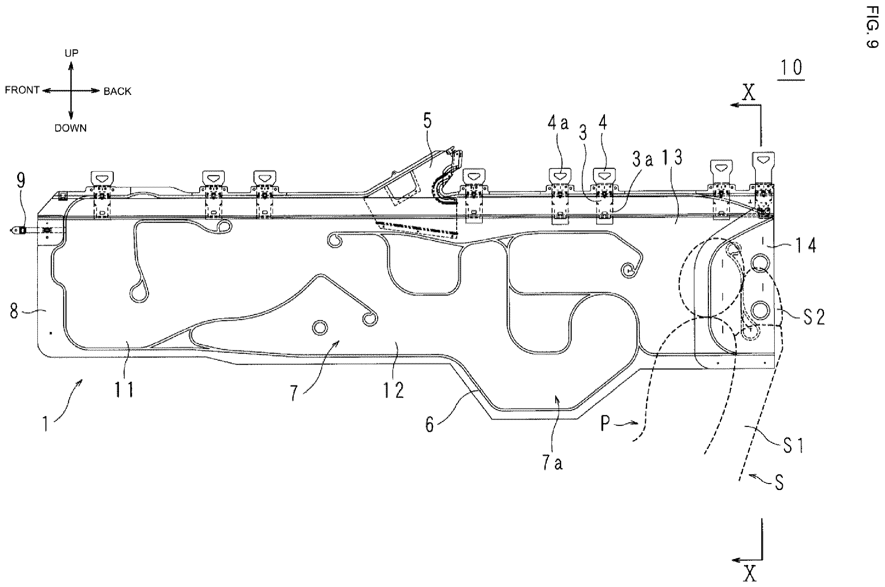

Next, a expansion and deployment of the airbag 1 will be described. FIG. 7 is a side view depicting the occupant restraint device 10 in the first expansion and deployment state. FIG. 8 is a schematic cross-sectional view taken along line A-A and line B-B in FIG. 7. When the airbag 1 deploys while the reclining angle of a seatback S1 of a rear row seat S provided in the vehicle is at a first angle, the airbag 1 assumes a first expansion and deployment state. In the present embodiment, the maximum reclining angle at which the seatback S1 can be reclined is defined as a first angle, and a state in which the seatback S1 is reclined at the first angle is defined as a tilted back state. Note that the first angle is not limited to the maximum reclining angle. For example, the first angle may be a tilted back state of the seatback S1 at which the seatback S1 of the rear row seat S and the airbag 1 at the time of expansion and deployment do not overlap each other when the occupant restraint device 10 is viewed from the side. Note that when the reclining angle of the seatback S1 is the first angle, a headrest S2 of the rear row seat S and the airbag 1 at the time of expansion and deployment may overlap each other in a side view of the occupant restraint device 10. The first angle may be a reclining angle of the seatback S1 at which the headrest S2 of the rear row seat S and the airbag 1 at the time of expansion and deployment do not overlap with each other when the occupant restraint device 10 is viewed from the side. The first angle may be a reclining angle of the seatback S1 of the rear row seat S in a case where, when the occupant restraint device 10 is viewed from the side, an upper end of the seatback S1 is positioned below a lower end of the rear chamber 14 of the airbag 1. In FIG. 7 and FIG. 9 described below, the rear row seats S and the occupant P are indicated by dashed lines.

When gas is supplied from the inflator 2 to the airbag 1, the front chamber 11, the lower chamber 12, and the main chamber 13 are expanded. The wrap 3a is detached from the fastener 4 by the expansion, and the airbag 1 is deployed downward, resulting in the state depicted in FIG. 3. When gas is further supplied from the inflator 2 to the airbag 1, the rear chamber 14 is expanded and the temporary sewn part 20 is broken. The rear chamber 14 is rotated about the fold line 14a by expansion and deployed rearward, and is brought into a first expansion and deployment state.

FIG. 8A is a schematic cross-sectional view taken along line A-A in FIG. 7. As depicted in FIG. 8A, the main chamber 13 of the airbag 1 is expanded on the left side of the window glass 53. FIG. 8B is a schematic cross-sectional view taken along line B-B in FIG. 7. As depicted in FIG. 8B, the rear chamber 14 of the airbag 1 is expanded on the left side of the vehicle body inner wall 54. Note that the rear chamber 14 may be expanded on the left side of the door trim 52 or the window glass 53.

As depicted in FIG. 7, when the airbag 1 is in the first expansion and deployment state, the rear chamber 14 is expanded at a position corresponding to the head of the occupant P seated in a comfortable orientation on the rear row seat S in a tilted back state in which the seatback S1 is tilted back at the first angle, and is capable of protecting the head of the occupant P. In the present embodiment, the comfortable orientation refers to an orientation in which the occupant reclines with their back on the seatback S1 of the rear row seat S in the tilted back state and their head on the headrest S2. The rear chamber 14 is provided so as to expand, for example, at the same position in the up-down direction and the front-to-back direction with respect to the vehicle body 50 as the head of the occupant P in the comfortable orientation. Accordingly, when the occupant P is in the comfortable orientation, the rear chamber 14 in the first expansion and deployment state can protect the head of the occupant P which swings to the left and right due to an impact from the outside of the vehicle body.

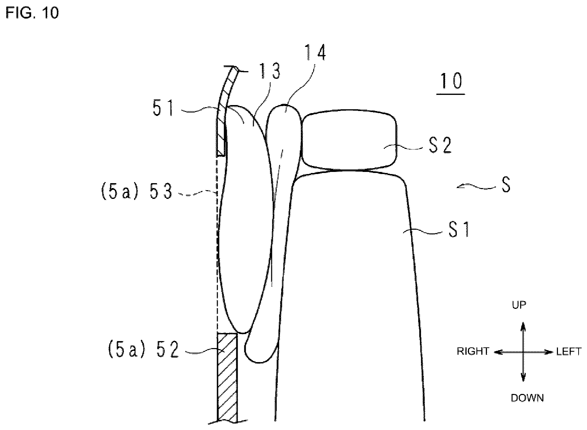

FIG. 9 is a side view depicting the occupant restraint device 10 in the second expanded and deployed state. FIG. 10 is a cross-sectional view taken along the line X-X in FIG. 9. The airbag 1 is in a second expanded and deployed state when deployed with the reclining angle of the rear row seat S provided in the vehicle in a second angle smaller than the first angle. In the present embodiment, the minimum reclining angle (0 degrees) of the seatback S1 is defined as a second angle, and a state in which the reclining angle of the seatback S1 is the second angle is defined as a non-tilted back state. Note that the second angle is not limited to the minimum reclining angle. For example, the second angle may be a reclining angle of the seatback S1 at which the seatback S1 of the rear row seat S and the airbag 1 at the time of expansion and deployment overlap each other when the occupant restraint device 10 is viewed from the side. In addition, the first angle may be a reclining angle of the seatback S1 at which the headrest S2 of the rear row seat S and the airbag 1 at the time of expansion and deployment overlap with each other when the occupant restraint device 10 is viewed from the side. The second angle may be a reclining angle of the seatback S1 of the rear row seat S in a case where, when the occupant restraint device 10 is viewed from the side, an upper end of the seatback S1 is positioned above a lower end of the rear chamber 14 of the airbag 1.

When gas is supplied from the inflator 2 to the airbag 1, the front chamber 11, the lower chamber 12, and the main chamber 13 are expanded in the same manner as when the rear row seat S is reclined, and the state depicted in FIG. 3 is obtained. When gas is supplied from the inflator 2 to the airbag 1, the rear chamber 14 is prevented from rotating about the fold line 14a by the rear row seats S, and is expanded while being bent forward at a position between the vehicle body side interior wall 5a and the rear row seat S. In this case, the amount of gas flowing into the rear chamber 14 is smaller than that in the first expansion and deployment state due to the fold line 14a and the partition part 61.

As the rear chamber 14 is expanded in a bent state, the airbag 1 fills the gap between the vehicle body inner wall 54 and the rear row seat S as depicted in FIG. 10. Therefore, the vehicle body inner wall 54, the airbag 1, and the rear row seat S are integrated to protect the occupant P seated on the rear row seat S when there is an impact on the vehicle body. Note that the rear chamber 14 may fill a gap between the door trim 52 or the window glass 53 and the rear row seats S. That is, in the present embodiment, the door trim 52, the window glass 53, the vehicle body side interior wall 5a including the vehicle body inner wall 54, the airbag 1, and the rear row seats S constitute the occupant restraint device 10.

According to the above configuration, the occupant can be protected in both cases where the reclining angle of the rear row seat S is large or small.

### Modified Example

In the embodiment described above, the airbag 1 is rolled up from the lower side to the upper side after the rear chamber 14 is folded back forward, but the present invention is not limited thereto. The airbag 1 may be folded by being rolled up from below and then folding back the rear chamber 14 forward. In addition, the airbag 1 may be folded in a bellows shape from the lower side toward the upper side.

Note that when a reference code is noted in a claim, the reference code is merely provided as a reference in correspondence with the reference code described in the embodiment in order to facilitate understanding of the claim. The scope of claims is not limited by the reference code.

The embodiments presently disclosed are to be considered as examples for all points and are not restrictive. The technical features described in the examples can be combined with each other, with the scope of the invention intended to include all changes within the scope of the claims of the present invention and the range equivalent to the scope of the claims. Furthermore, the independent and dependent claims set forth in the claims can be combined with each other in any and all combinations, regardless of the format of reference. Furthermore, while the claims are in a format in which a claim refers to two or more other claims (multiple claim format), the present invention is not limited to this format. A multiple claim (multi-multi claim) may be written using a format that cites at least one multiple claim.

### Description of Reference Numerals

1. Curtain airbag (airbag)
2. Inflator
3. Tab
3a. Wrap
4. Fastener
4a. Opening
5. Connecting part
5a. Interior wall
6. Seam
7. Expanding part
7a. Downward expanding part
8. Non-expanding part
9. Strap
10. Occupant restraint device
11. Front chamber
12. Lower chamber
13. Main chamber
14. Rear chamber
14a. Fold line
20. Temporary sewn part
50. Vehicle body
51. Roof side rail part
52. Door trim
53. Window glass
54. Vehicle body inner wall
61. Partition part
61a. Vent hole
P. Occupant
S. Rear row seat
S1. Seatback
S2. Headrest

## Claims

1. A curtain airbag (1) comprising:
a main chamber (13) extending from a front side toward a rear side of a vehicle body (50); and
a rear chamber (14) provided to the rear of the main chamber (13), wherein
the airbag:
is rolled upward from below, folded, and attached to the vehicle body (50) in a state where a rear end of the rear chamber (14) is folded back so as to contact a first surface of the main chamber (13),
enters a first expansion and deployment state upon expansion and deployment when the reclining angle of the seatback (S1) of the rear row seat (S) attached to the vehicle body (50) is at a first angle, where the rear chamber (14) deploys behind the main chamber (13), and
enters a second expanded and deployed state upon expansion and deployment when the reclining angle of the seatback (S1) of the rear row seat (S) is set to a second angle smaller than the first angle, where the main chamber (13) and the rear chamber (14) expand and deploy while remaining in a folded-back state sandwiched between the vehicle body (50) and the interior wall (5a).

2. The curtain airbag (1) according to claim 1, comprising:
a partition part (61) that partitions the main chamber (13) and the rear chamber (14).

3. The curtain airbag (1) according to claim 2, wherein the partition part (61) is provided with a vent hole (61a) through which gas can pass between an interior of the main chamber (13) and an interior of the rear chamber (14).

4. The curtain airbag (1) according to claim 1 or 2, wherein the rear chamber (14) expands and deploys in a position corresponding to a head of an occupant (P) seated in a comfortable orientation on the rear row seat (S) reclined at the first angle, and is set to the first expansion and deployment state.

5. The curtain airbag (1) according to claim 1 or 2, wherein the rear chamber (14) of the curtain airbag (1) is provided with a temporary sewn part (20) that, in a folded state, connects the rear chamber (14) to the main chamber (13), and breaks when the rear chamber (14) deploys into the first expansion and deployment state.

6. A vehicle body (50) comprising the curtain airbag described in claim 1.

7. A method for manufacturing a curtain airbag (1) that is attached to a vehicle body (50) and expands and deploys by means of gas supplied from an inflator (2), the method comprising:
preparing a curtain airbag (1) including a main chamber (13) that extends from a front side toward a rear side of a side part of the vehicle body (50), and a rear chamber (14) provided to the rear of the main chamber (13);
folding a rear end of the rear chamber (14) forward so as to contact a first surface of the main chamber (13); and
rolling and folding the main chamber (13) and the rear chamber (14) upward from below.

8. The method of manufacturing the curtain airbag (1) according to claim 7, further comprising connecting of the folded-back rear chamber (14) to the main chamber (13) by means of a temporary sewn part (20).

9. A method of attaching a curtain airbag (1) to a vehicle body (50), the method comprising:
preparing a curtain airbag (1) including a main chamber (13) extending from a front side toward a rear side of a side part of the vehicle body (50), and a rear chamber (14) provided to the rear of the main chamber (13);
folding a rear end of the rear chamber (14) forward so as to contact a first surface of the main chamber (13); and
rolling and folding the main chamber (13) and the rear chamber (14) upward from below, and
attaching the curtain airbag (1) to the vehicle body (50) such that:
upon expansion and deployment when a seatback (S1) of a rear row seat (S) attached to the vehicle body (50) is reclined at a first angle, the rear chamber (14) deploys behind the main chamber (13) and the airbag enters a first expansion and deployment state; and
upon expansion and deployment when an angle of the seatback (S1) is at a second angle lower than the first angle, the main chamber (13) and the rear chamber (14) expand and deploy while remaining in a folded-back state sandwiched between an interior wall (5a) of the vehicle body (50) and the rear row seat (S), and the airbag enters a second expanded and deployed state.

10. An occupant restraint device (10) comprising:
a curtain airbag (1) including a main chamber (13) extending from a front side toward a rear side of a side part of a vehicle body (50), and a rear chamber (14) provided behind the main chamber (13); and
a rear row seat (S) attached to the vehicle body (50), and including a seatback (S1) that reclines rearward, wherein the curtain airbag (1):
is rolled upward from below, folded, and attached to the vehicle body (50) in a state where a rear end of the rear chamber (14) is folded back so as to contact a first surface of the main chamber (13),
enters a first expansion and deployment state upon expansion and deployment when the reclining angle of the seatback (S1) of the rear row seat (S) is set to a first angle, where the rear chamber (14) deploys behind the main chamber (13), and
enters a second expanded and deployed state upon expansion and deployment when the reclining angle of the seatback (S1) of the rear row seat (S) is set to a second angle smaller than the first angle, where the main chamber (13) and the rear chamber (14) expand and deploy while remaining in a folded-back state sandwiched between the vehicle body (50) and a side inner wall (5a).
